# EUROPÄISCHE PATENTSCHRIFT

(11) **EP 1 025 407 B1**
(45) Veröffentlichungstag und Bekanntmachung des Hinweises auf die Patenterteilung: **16.11.2005**
(21) Anmeldenummer: 98955479.5
(22) Anmeldetag: 16.10.1998
(51) Int. Cl.: F25D 23/06

(54) **WÄRMEISOLIERENDE WANDUNG**
HEAT-INSULATING WALL
PAROI CALORIFUGE

(30) Priorität: 16.10.1997 DE 19745827
(43) Veröffentlichungstag der Anmeldung: 09.08.2000
(73) Patentinhaber: BSH Bosch und Siemens Hausgeräte GmbH, 81739 München (DE)
(72) Erfinder: WENNING, Udo, D-89537 Giengen (DE); HIRATH, Jürgen, D-89522 Heidenheim (DE); EBERHARDT, Hans-Frieder, D-89537 Giengen-Burgberg (DE); WOLF, Ulrich, D-89537 Giengen (DE)
(86) Internationale Anmeldenummer: PCT/EP1998/006603
(87) Internationale Veröffentlichungsnummer: WO 1999/020964

(56) Entgegenhaltungen:
- EP-A- 0 071 090
- EP-A- 0 660 057
- DE-A- 19 520 020
- GB-A- 890 372
- US-A- 3 380 615

## Beschreibung

Die Erfindung betrifft eine wärmeisolierende Wandung mit zwei äußeren, im Abstand zueinander angeordneten, zumindest im wesentlichen vakuumdichten Deckschichten, welche mit einem entlang ihrer Kontur verlaufenden, aus mehreren Profilabschnitten zusammengefügten Verbindungsprofil vakuumdicht miteinander verbunden sind und welche zusammen mit dem Verbindungsprofil einen evakuierbaren Zwischenraum umschließen, welcher mit evakuierbarern Wärmeisolationsmaterial verfüllt ist.

Bei bekannten, auf Vakuumtechnik basierenden wärmeisolierenden Wandungen, insbesondere bei Gehäusen für Kältegeräte ist es üblich, das die beiden Deckschichten der wärmeisolierenden Wandung oder des wärmeisolierenden Gehäuses verbindende Verbindungsprofil aus mehreren Profilabschnitten zusammenzusetzen, wobei die Profilabschnitte im Eckbereich der Wandungen bzw. Gehäuse eine Stoßstelle bilden. An dieser Stoßstelle sind die Profilabschnitte entweder in Form eines Gehrungsschnittes oder aber stumpf aneinandergefügt und vakuumdicht miteinander verschweißt sind. Bei den im Eckbereich vorgesehenen Fügestellen kann es durchaus vorkommen, daß nicht nur die Stoßstelle aufgrund der Herstelltoleranzen der einzelnen Profilabschnitte infolge eines zu großen Spaltes schweißtechnisch äußerst schwierig zu beherrschen ist, sondern auch die Winkligkeit durch die Stoßstelle im Eckbereich nur dann gewährleistet ist, wenn beim Fügen der einzelnen Profilabschnitte aufwendige Spannmaßnahmen zur Anwendung kommen. Zudem kann es vorkommen, daß im Eckbereich eine Anhäufung von Schweißnähten auftritt.

Aufgabe der Erfindung ist es, bei einer wärmeisolierenden Wandung gemäß dem Oberbegriff des Anspruches 1 ein Verbindungsprofil vorzuschlagen, bei welchem an den Ekken der wärmeisolierenden Wandung die Nachteile des Standes der Technik vermieden sind.

Diese Aufgabe wird gemäß der Erfindung dadurch gelöst, daß die Profilabschnitte des Verbindungsprofiles über die Eckbereiche der wärmeisolierenden Wandung hinweg einstückig ausgebildet sind.

Durch die erfindungsgemäße Ausbildung der Profilabschnitte sind diese stoßfrei über die Eckbereiche der wärmeisolierenden Wandung bzw. Gehäuse hinweg geführt, so daß bei wärmeisolierenden Wandungen und Gehäusen, deren Deckschichten und das die Deckschichten verbindende Verbindungsprofil z. B. aus Edelstahlblech gefertigt sind, die Problematik zusätzlicher, potentielle Dichtheitsprobleme der Vakuumisolierung verursachender Schweißnahtanhäufungen entschärft ist. Darüber hinaus ist durch die Bereitstellung der einstückigen Eckprofile sichergestellt, daß die gewünschte und aus funktionstechnischen Gründen geforderte Geometrie sicher eingehalten wird, da die Eckprofile als vorgeformte oder vorgefertigte Bauelemente zum Einsatz kommen können und die Ausbildung der Ecke nicht durch erst im Fertigungsverfahren zusammenzufügende Profilabschnitte bewerkstelligt werden muß. Außerdem lassen sich die Eckprofile mit unterschiedlicher Profilierung, wie beispielsweise als Rundecken ausbilden, welche beim Verschweißen der Deckschichten mit dem Verbindungsprofil einen durchgehenden, ohne Unterbrechungen ablaufenden, kontinuierlichen und somit prozeßsicheren Schweißvorgang ermöglichen.

Nach einer bevorzugten Ausführungsform des Gegenstandes der Erfindung mit einem im Querschnitt im wesentlichen U-förmig ausgebildeten Verbindungsprofil ist vorgesehen, daß die Profilabschnitte im Eckbereich durch Umformen eines folienartigen, zumindest weitestgehend vakuumdichten Werkstoffes gebildet sind.

Durch die Verwendung von folienartigem Material zur Herstellung der Profilabschnitte ist die Wärmeleitung zwischen den unterschiedlichen Temperaturniveaus ausgesetzten Deckschichten auf einfache Weise minimiert, wobei bei Verwendung von Edelstahlblech für die Deckschichten, bzw. einer Edelstahlfolie für die Eckprofile und unter Anwendung von Schweißverfahren, wie Laserstrahlschweißen, Mikroplasmaschweißen oder dergleichen auf besonders einfache Weise großseriengerechte, vakuumdichte wärmeisolierende Wandungen und Gehäuse erzeugbar sind.

Gemäß einer alternativen Ausführungsform des Gegenstandes der Erfindung mit einem im Querschnitt im wesentlichen U-förmig ausgebildeten Verbindungsprofils ist vorgesehen, daß die Profilabschnitte im Eckbereich aus mehreren, zumindest weitestgehend vakuumdicht ausgebildeten Profilabschnittselementen zusammengefügt sind, von denen das die Basis des U-profiligen Querschnitts des Verbindungsprofiles bildende Element aus folienartigem Werkstoff gebildet ist.

Derartig aufgebaute Eckprofile, z.B. aus metallbeschichteten oder laminierten Kunststoffen bieten die Möglichkeit, bei durch die folienartig ausgebildete Basis bewirkte geringe Wärmeleitfähigkeit, die Schenkel der Eckprofile gegenüber der Basis mit deutlich größerer Materialstärke zu bemessen, wodurch sich beispielsweise ein Verschweißvorgang mit den Deckschichten, wie z.B. auch metallbeschichtete oder laminierten Kunststoffplatinen deutlich erleichtert und mit wesentlich höherer Prozeßgeschwindigkeit durchführen läßt.

Besonders einfach und sicher vakuumdicht miteinander verbindbar sind die Profilabschnittselemente der Profilabschnitte bei in Großserie hergestellten Stückzahlen, wenn nach einer nächsten bevorzugten Ausführungsform des Gegenstandes der Erfindung vorgesehen ist, daß die Profilabschnittselemente der Profilabschnitte schweißtechnisch miteinander verbunden sind.

Besonders sicher und langzeitstabil aufrechterhaltbar ist, daß die wärmeisolierende Wirkung der wärmeisolierenden Wandungen bzw. Gehäuse bewirkende Vakuum, wenn nach einer weiteren bevorzugten Ausführungsform des Gegenstandes der Erfindung vorgesehen ist, daß die Profilabschnitte aus schweißbaren metallischen Werkstoffen gebildet sind.

Gemäß einer weiteren bevorzugten Ausführungsform des Gegenstandes der Erfindung ist vorgesehen, daß die Profilabschnitte an ihren Verbindungsstellen untereinander durch an den Deckschichten festgesetzte Stützelemente abgestützt sind.

Hierdurch ist erreicht, daß die Profilabschnitte an ihren Verbindungsstellen zumindest annähernd höhengleich zueinander angeordnet sind, wobei durch die Stützelemente zusätzlich die Anbringung und Krafteinleitung von die Profilabschnitte mit den Deckschichten verspannende Spannwerkzeuge erleichtert ist. Darüber hinaus ist durch die Stützelemente auch eine besonders sichere, vakuumdichte Verschweißung zwischen den Profilabschnitten möglich ist.

Entsprechend einer nächsten vorteilhaften Ausgestaltung des Gegenstandes der Erfindung ist vorgesehen, daß die Profilabschnitte zumindest an ihren Schenkeln in Art einer Nut- und Federverbindung zusammenfügbar sind.

Durch eine derartige Ausbildung der Profilabschnitte sind diese im Bereich ihrer Schenkel besonders sicher mit den Deckschichten, beispielsweise durch Verschweißen vakuumdicht verbindbar. Ebenso ermöglichen derart geschaltete Profilabschnitte einen senkrecht zu ihrer Verbindungsrichtung wirkenden, formschlüssigen Verbund untereinander, welcher nicht nur eine einfachere Höhenpositionierung der Profilabschnitte beim Zusammenfügen mit den Deckschichten ermöglicht, sondern auch die Formstabilität des aus den Profilabschnitten zusammengefügten Verbindungsprofiles, insbesondere an deren Verbindungsstellen deutlich verbessert. Ebenso ist durch diese Ausführungsform eine durchgehende Schweißnahtführung entlang der Kontur der Deckschichten möglich.

Besonders prozeßsicher und fertigungsgünstig ist ein Kältegerät mit einem wärmeisolierenden Gehäuse und einer wärmeisolierenden Tür ausgebildet, wenn nach einer nächsten bevorzugten Ausführungsform des Gegenstandes der Erfindung vorgesehen ist, daß das Gehäuse und die Tür nach einem der Ansprüche 1 bis 7 ausgebildet sind. Ebenso ist ein derartiges Kältegerät besonders umweltfreundlich recyclebar herstellbar.

Ebenso besonders prozeßsicher und fertigungsgünstig herstellbar sowie umweltfreundlich entsorgbar ist ein Haushaltsherd mit einer wärmeisolierend ausgebildeten Herdmuffel, wenn nach einer letzten bevorzugten Ausführungsform des Gegenstandes der Erfindung vorgesehen ist, daß die Herdmuffel nach einem der Ansprüche 1 bis 7 ausgebildet ist.

Die Erfindung ist in der nachfolgenden Beschreibung anhand eines in der beigefügten Zeichnung vereinfacht dargestellten Haushalts-Kältegerätes erläutert.

Es zeigen:
- Fig. 1: in vereinfachter, schematischer Darstellung das Gehäuse eines Haushalts-Kältegerätes mit einer Tür, welche wie das Gehäuse aus zwei beabstandeten, mit einem aus Abschnitten zusammengesetzten Verbindungsprofil verbundenen Deckschichten gebildet ist, in Schnittdarstellung von der Seite,
- Fig. 2: das Gehäuse mit dem seine Deckschichten verbindenden Verbindungsprofil, dessen Profilabschnitte im Eckbereich des Gehäuses einstückig ausgeführt sind, in raumbildlicher Ansicht von der Seite und
- Fig. 3: einer der einstückigen, im Eckbereich des Gehäuses eingesetzten Profilabschnitte, in raumbildlicher Ansicht von oben.

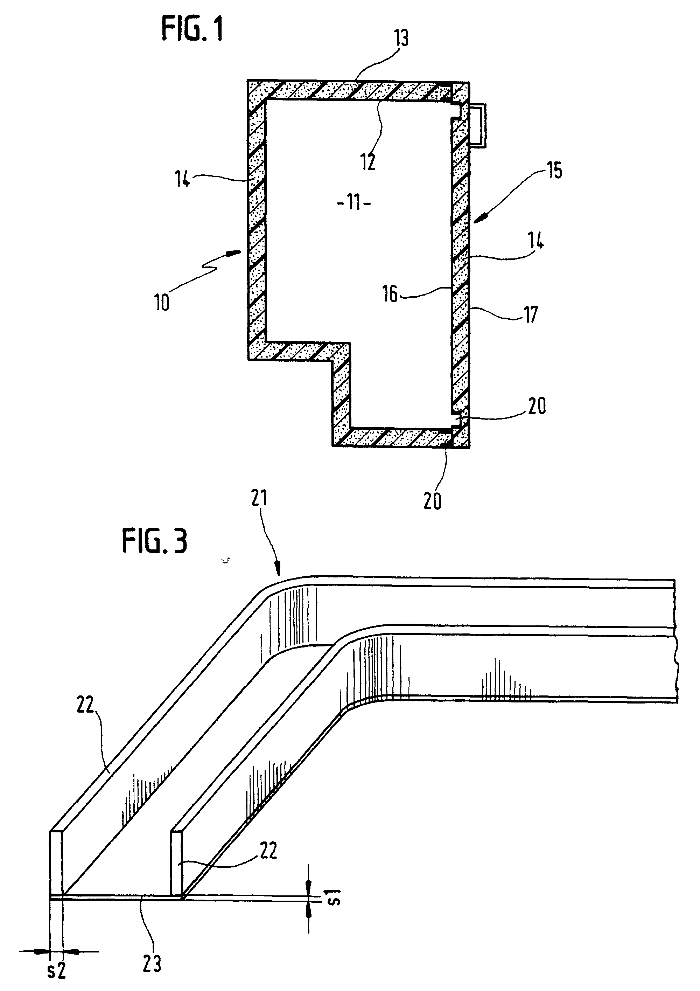

Fig. 1 zeigt in vereinfachter, schematischer Darstellung ein zur Verwendung für ein Haushalts-Kältegerät, wie einen Haushalts-Kühl- oder Gefrierschrank geeignetes, wärmeisolierendes Gehäuse 10, dessen als Lagerraum 11 dienender Innenraum mit einer als Innenverkleidung ausgebildeten Deckschicht 12 ausgekleidet ist, welche durch spanlose Formgebung, z.B. einer Edelstahlblechplatine oder einer korrosionsgeschützten Stahlblechplatine erzeugt ist. Im Abstand zur inneren Deckschicht 12 weist das Gehäuse 10 eine äußere, als Außenverkleidung dienende Deckschicht 13 auf, welche aus gleichem Material wie die Innenverkleidung spanlos geformt ist. Zwischen den Deckschichten 13 und 12 ist ein die beiden Deckschichten gegeneinander abstützendes, evakuierbares Wärmeisolationsmaterial 14 eingebracht, welches beispielsweise aus plattenförmigem, offenzellig ausgebildetem Polyurethanschaum oder offenzelligem Polysterolschaum besteht. Mit einem solchen Wärmeisolationsmaterial 14 ist auch eine zum Verschließen des Lagerraumes 11 dienende, am Gehäuse 10 drehbar gelagerte Tür 15 ausgestattet, welche wie das Gehäuse 10 aus einer inneren Deckschicht 16 und einer dazu beabstandeten äußeren Deckschicht 17 gebildet ist, welche gegeneinander durch das Wärmeisolationsmaterial 14 abgestützt sind. Sowohl die Deckschichten 16 und 17 der Tür 15 als auch die zur Bildung des Gehäuses 10 zur Anwendung kommenden Deckschichten 12 und 13 sind jeweils vakuumdicht miteinander durch ein Verbindungsprofil 20 verbunden. Die Deckschichten 12 und 13 bzw. 16 und 17 umgrenzen zusammen mit dem Verbindungsprofil 20 einen evakuierbarer Zwischenraum, welcher mit dem im Evakuierungsfall die Deckschichten 12 und 13 bzw. 16 und 17 abstützenden Wärmeisolationsmaterial verfüllt ist.

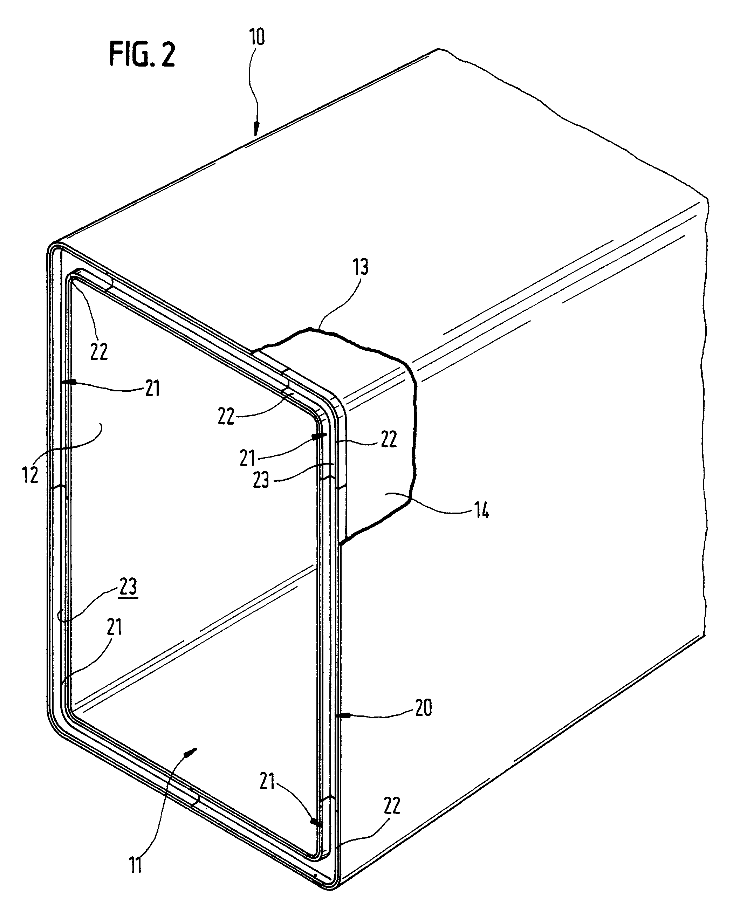

Die Ausbildung des Verbindungsprofiles 20 ist im weiteren am Beispiel des in Fig. 2 genauer dargestellten Gehäuses 10 erläutert.

Wie insbesondere aus Fig. 2 hervorgeht, weist das im Querschnitt U-förmig ausgebildete Verbindungsprofil 20 zum Teil gerade und zum Teil winkelförmig ausgebildete Profilabschnitte auf, welche im zusammengefügten Zustand einen geschlossenen, dem Querschnitt des Gehäuses 10 bzw. der Türgeometrie entsprechenden Rahmen bilden. Von den Profilabschnitten erstrecken sich die in den Ecken des Gehäuses 10 vorgesehenen Profilabschnitte 21 ohne Stoßstelle durchgehend über den Eckbereich des Gehäuses 10 hinweg, wobei die freien Enden der Eckprofilabschnitte 21 entweder untereinander oder über gerade ausgebildete Profilabschnitte unter Bildung einer Stoßstelle vakuumdicht zusammengefügt sind. Die Eckprofilabschnitte 21 sind wie die geraden Profilabschnitte aus einzelnen Profilabschnittselementen zusammengesetzt, welche einerseits durch deren Schenkel 22 und andererseits durch deren die Schenkel 22 verbindende Basis 23 gebildet sind.

Wie Fig. 3 zeigt, ist die Basis 23 der im Querschnitt U-förmig ausgebildeten Profilabschnitte aus einem einstückigen, beispielsweise aus einer Edelstahlfolie erzeugten Materialzuschnitt gefertigt und mit einer Wandstärke s1 ausgestattet, welche zur Erzielung einer möglichst geringen Wärmeleitung deutlich geringer als die Materialstärke s2 der beispielsweise aus einem Edelstahlblechstreifen spanlos geformten Schenkel 22 ausgeführt ist. Die Schenkel 22 sind mit der Basis 23 schweißtechnisch, beispielsweise durch Laserschweißen oder Mikroplasmaschweißen vakuumdicht verbunden und dienen zur Befestigung des Verbindungsprofiles 20 an dem z.B. aus Edelstahlblech gefertigten Deckschichten 12 und 13 bzw. 16 und 17. Zum Zwecke seiner Befestigung an den Deckschichten 12 und 13 ist das Verbindungsprofil 20 derart zwischen diese eingefügt, daß die Schenkel 22 der Profilabschnitte mit ihrer Außenseite an den Innenseiten der Deckschichten 12 und 13 anliegen, wobei die freien Enden der Schenkel 22 im wesentlichen bündig mit den freien Enden der Deckschichten 12 und 13 abschließen. Zur Erzielung eines vakuumdichten Verbundes zwischen den Deckschichten 12 und 13 und den Schenkeln 22 werden die Deckschichten 12 und 13 entlang der Schenkel 22 beispielsweise durch Elektronenstrahlschweißen oder Mikroplasmaschweißen vakuumdicht miteinander verbunden (siehe hierzu Fig. 2).

Das am Beispiel des Gehäuses 10 beschriebene, mit stoßfrei ausgebildeten Eckprofilabschnitten 21 zusammengesetzte Verbindungsprofil 20 läßt sich in analoger Weise zur vakuumdichten Verbindung der Deckschichten 16 und 17 an der Tür 15 anwenden, wobei die Deckschichten 16 und 17 der Tür 15, je nach dem ob die Verbindungsstellen z.B. als Eck- oder Überlappstoß ausgebildet werden sollen, entsprechend geformt sind. Für die Anwendung des Verbindungsprofiles 20 bei der Tür 15 ist ersteres zur Unterbindung der Wärmeleitung von der inneren Deckschicht 16 zur äußeren Deckschicht 17 lagerraumseitig an der Tür 15 vorzusehen.

Neben dem Einsatz des Verbindungsprofiles 20 zum Verbinden der inneren und äußeren Deckschichten eines Gehäuses 10 bzw. einer Tür 15 eignet sich das Verbindungsprofil 20 natürlich auch zur Ausbildung eines vakuumdichten Verbundes einer aus einer äußeren und einer inneren Deckschicht aufgebauten, vakuumisolierten Herdmuffel, wobei im Unterschied zum Gehäuse 10 bzw. der Tür 15 der sich zwischen den Deckschichten der Herdmuffel ergebende Zwischenraum mit einem an die bei der Herdmuffel auftretenden bestimmungsgemäßen Temperaturen angepaßten Wärmeisolationsmaterial zur Abstützung der Deckschichten verfüllt ist.

In Abkehr des Anbringungsvorschlages des Verbindungsprofiles 20 am Gehäuse 10 ist es auch möglich, das Verbindungsprofil so auszubilden, daß die Schenkel die Außenseiten der Deckschichten 12 und 13 bzw. 16 und 17 übergreifen.

## Patentansprüche

1. Wärmeisolierende Wandung mit zwei äußeren im Abstand zueinander angeordneten, zumindest im wesentlichen vakuumdichten Deckschichten, welche mit einem entlang ihrer Kontur verlaufenden, aus mehreren Profilabschnitten zusammengefügten Verbindungsprofil vakuumdicht miteinander verbunden sind und welche zusammen mit dem Verbindungsprofil einen evakuierbaren Zwischenraum umschließen, welcher mit evakuierbarem Wärmeisolationsmaterial verfüllt ist, **dadurch gekennzeichnet, daß** die Profilabschnitte (21) des Verbindungsprofils (20) über die Eckbereiche der wärmeisolierenden Wandung (10,15) hinweg einstückig ausgebildet sind.

2. Wärmeisolierende Wandung nach Anspruch 1 mit einem im Querschnitt im wesentlichen U-förmig ausgebildeten Verbindungsprofil, **dadurch gekennzeichnet, daß** die Profilabschnitte (21) im Eckbereich durch Umformen eines folienartigen, zumindest weitestgehend vakuumdichten Werkstoffes gebildet sind.

3. Wärmeisolierende Wandung nach Anspruch 1 mit einem im Querschnitt im wesentlichen U-förmig ausgebildeten Verbindungsprofil, **dadurch gekennzeichnet, daß** die Profilabschnitte (21) im Eckbereich aus mehreren, zumindest weitestgehend vakuumdicht ausgebildeten Profilabschnittselementen (22, 23) zusammengefügt sind, von denen das die Basis (23) des U-profiligen Querschnitts des Verbindungsprofiles (20) bildende Element aus folienartigem Werkstoff gebildet ist.

4. Wärmeisolierende Wandung nach Anspruch 3, **dadurch gekennzeichnet, daß** die Profilabschnittselemente (22, 23) der Profilabschnitte (21) schweißtechnisch miteinander verbunden sind.

5. Wärmeisolierende Wandung nach einem der Ansprüche 1 bis 4, **dadurch gekennzeichnet, daß** die Profilabschnitte (21) und die Deckschichten (12, 13; 16, 17) aus schweißbaren metallischen Werkstoffen gebildet sind.

6. Wärmeisolierende Wandung nach einem der Ansprüche 1 bis 5, **dadurch gekennzeichnet, daß** die Profilabschnitte (21) an ihren Verbindungsstellen untereinander durch an den Deckschichten (12, 13; 16, 17) festgesetzte Stützelemente abgestützt sind.

7. Wärmeisolierende Wandung nach einem der Ansprüche 2 bis 6, **dadurch gekennzeichnet, daß** die Profilabschnitte (21) zumindest an ihren Schenkeln (22) in Art einer Nut- und Federverbindung zusammenfügbar sind.

8. Kältegerät mit einem wärmeisolierenden Gehäuse und einer wärmeisolierenden Tür, **dadurch gekennzeichnet, daß** das Gehäuse (10) und die Tür (15) nach einem der Ansprüche 1 bis 7 ausgebildet sind.

9. Haushaltsherd mit einer wärmeisolierend ausgebildeten Herdmuffel, **dadurch gekennzeichnet, daß** die Herdmuffel nach einem der Ansprüche 1 bis 7 ausgebildet ist.

## Claims

1. Thermally insulating wall with two outer spaced-apart and at least substantially vacuum-tight cover layers which are vacuum-tightly interconnected by a connecting profile member extending along the contour thereof and composed of a plurality of profile member sections and which conjunctively with the connecting profile member enclose an evacuatable intermediate space filled with evacuatable thermal insulation material, **characterised in that** the profile member sections (21) of the connecting profile member (20) are formed to be integral around the corner regions of the thermally insulating wall (10, 15).

2. Thermally insulating wall according to claim 1 with a connecting profile member formed to be substantially U-shaped in cross-section, **characterised in that** the profile member sections (21) are formed in the corner region by reshaping of a foil-like, at least substantially vacuum-tight material.

3. Thermally insulating wall according to claim 1 with a connecting profile member formed to be substantially U-shaped in cross-section, **characterised in that** the profile member sections (21) are assembled in the corner region from a plurality of profile member section elements (22, 23) of at least substantially vacuum-tight construction of which the element forming the base (23) of the U-profiled cross-section of the connecting profile member (20) is formed from foil-like material.

4. Thermally insulating wall according to claim 3, **characterised in that** the profile member section elements (22, 23) of the profile member sections (21) are connected together by welding.

5. Thermally insulating wall according to one of claims 1 to 4, **characterised in that** the profile member sections (21) and the cover layers (12, 13; 16, 17) are formed from weldable metallic materials.

6. Thermally insulating wall according to one of claims 1 to 5, **characterised in that** the profile member sections (21) are supported relative to one another at their connecting points by support elements fixed to the cover layers (12, 13; 16, 17).

7. Thermally insulating wall according to one of claims 2 to 6, **characterised in that** the profile member sections (21) can be assembled at least at the limbs (22) thereof in the manner of a groove-and-key connection.

8. Refrigerating appliance with a thermally insulating housing and a thermally insulating door, **characterised in that** the housing (10) and the door (15) are constructed according to one of claims 1 to 7.

9. Domestic oven with an oven muffle of thermally insulating construction, **characterised in that** the oven muffle is formed in accordance with one of claims 1 to 7.

## Revendications

1. Paroi calorifuge comprenant deux couches de recouvrement externes, disposées avec un écartement, au moins essentiellement étanches au vide, lesquelles sont reliées ensemble en étant étanches au vide avec un profil de liaison passant le long de leur contour, assemblées à partir de plusieurs sections de profil et lesquelles renferment conjointement avec le profil de liaison un espace intermédiaire dans lequel le vide peut être fait, qui est rempli d'un matériau calorifuge dans lequel le vide peut être fait, **caractérisée en ce que** les sections de profil (21) du profil de liaison (20) sont conçues d'une seule pièce par-delà les zones angulaires de la paroi calorifuge (10, 15).

2. Paroi calorifuge selon la revendication 1 avec un profil de liaison conçu essentiellement en forme de U en section transversale, **caractérisé en ce que** les sections de profil (21) sont formées dans la zone angulaire par transformation d'une matière de type feuille, au moins le plus possible étanche au vide.

3. Paroi calorifuge selon la revendication 1 avec un profil de liaison essentiellement en forme de U en section transversale, **caractérisée en ce que** les sections de profil (21) sont assemblées dans la zone angulaire à partir de plusieurs éléments de section de profil (22, 23) conçus en étant au moins le plus possible étanches au vide, dont l'élément formant la base (23) de la section transversale à profil en U du profil de liaison (20) est formé d'une matière de type feuille.

4. Paroi calorifuge selon la revendication 3, **caractérisée en ce que** les éléments de section de profil (22, 23) des sections de profil sont reliés ensemble par une technique de soudage.

5. Paroi calorifuge selon l'une des revendications 1 à 4, **caractérisée en ce que** les sections de profil (21) et les couches de recouvrement (12, 13 ; 16, 17) sont formées de matières métalliques pouvant être soudées.

6. Paroi calorifuge selon l'une des revendications 1 à 5, **caractérisée en ce que** les sections de profil (21) sont supportées entre elles à leurs endroits de liaison par des éléments d'appui fixés à leurs couches de recouvrement (12, 13 ; 16, 17).

7. Paroi calorifuge selon l'une des revendications 2 à 6, **caractérisée en ce que** les sections de profil (21) peuvent être assemblées au moins sur leurs branches (22) à la manière d'un assemblage par rainure et languette.

8. Appareil frigorifique avec un corps calorifuge et une porte calorifuge, **caractérisé en ce que** le corps (10) et la porte (15) sont conçus selon l'une des revendications 1 à 7.

9. Cuisinière ménagère comprenant une moufle conçue de manière calorifuge, **caractérisée en ce que** la moufle est conçue selon l'une des revendications 1 à 7.
